# EUROPEAN PATENT APPLICATION

(11) **EP 1 675 012 A1**
(43) Date of publication of application: **28.06.2006**
(21) Application number: 03818721.7
(22) Date of filing: 22.09.2003
(51) Int. Cl.: G06F 13/00, H04L 12/66

(54) **DATA COMMUNICATION SYSTEM, PROGRAM, AND RECORDING MEDIUM**

(71) Applicant: Japan Media Systems Corp., Tokyo 101-0021 (JP)
(72) Inventor: SHINODA, Koichi, c/o Japan Media Systems Corp., Tokyo 101-0021 (JP); TOGASHI, Hiroaki, c/o Japan Media Systems Corp., Tokyo 101-0021 (JP)
(74) Representative: Appelt, Christian W.
(86) International application number: PCT/JP2003/012066
(87) International publication number: WO 2005/029337

(57) **Abstract**

The invention provides a data communication system in which a private IP terminal (client terminal) 40 arranged on a private network within a firewall makes connection to a public server 50 by automatically searching for a communication path capable of passing through the firewall. The terminal arranged within the firewall is provided with path search means for automatically searching for a combination of a connection type, a port number, and a communication protocol capable of passing through the firewall by attempting connection to the public server 50 while successively modifying the combination of the connection type, the port number, and the communication protocol, and data communication means for performing data communication by forming a communication path with the public server 50 based on the searched combination of the connection type, the port number, and the communication protocol.

## Description

### Technical Field

The present invention relates to a data communication system between a terminal arranged in a private network within a firewall and a server or the like on the Internet. In detail, the invention relates to a data communication system, program, and storage medium which automatically search for a communication path capable of passing through the firewall and makes connection to a server.

### Background Art

In many cases, a firewall (gateway) is set on a connection point between a private network and the Internet to limit connection and communication paths (communication type of TCP (Transmission Control Protocol) /UDP (User Datagram Protocol), port No., and protocol) between the Internet and the private network for security.

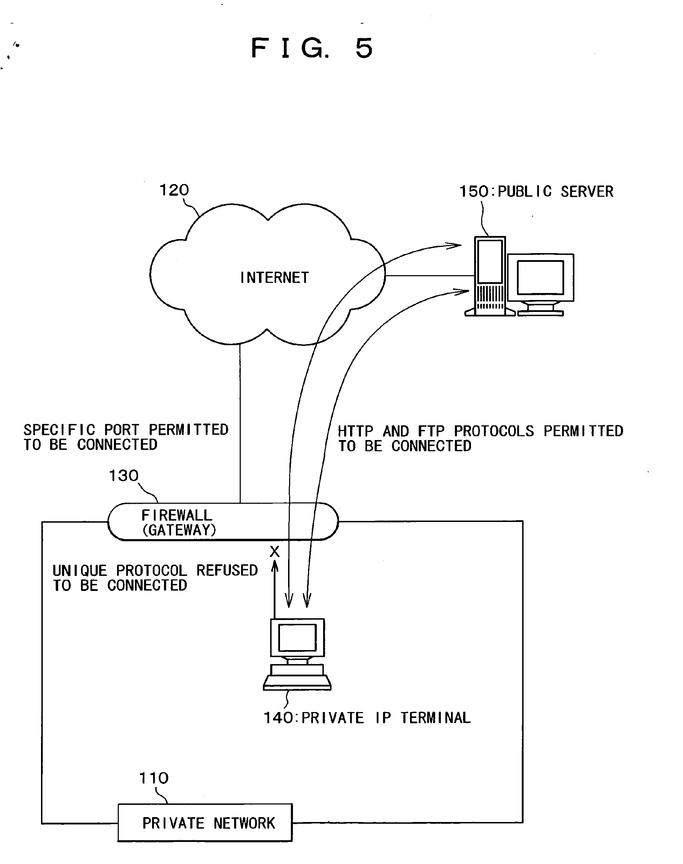

For example, in the conventional data communication system shown in Fig. 5, a firewall (gateway) 130 is provided at a connection point between a private network 110 and the Internet 120, and a port and a communication protocol that are permitted to be connected by the firewall (gateway) 130 are set. Therefore, a private IP address terminal (hereinafter, referred to as "private IP terminal") 140 arranged in the private network 110 performs data communication with a public server 150 on the Internet by using the port permitted to be connected and the communication protocol permitted to be connected.

Therefore, when an application program or the like that uses a unique protocol operating on a terminal on the private network performs communication with a global IP address terminal (server) (hereinafter, referred to as "global IP terminal" or "public terminal") on the Internet, it is necessary to modify the settings of a part of communication paths limited by the firewall (gateway) so that a communication path that only the application program or the like uses is passed through, or modify a communication port by recompiling the application program or the like.

### Disclosure of Invention

The invention makes it possible to perform communication between a private IP terminal and a global IP terminal by detecting and setting a communication path that enables dynamic communication by a program itself without troublesome modifying the settings of the firewall (gateway) or recompiling the program. A user of the application program can receive services by making connection to a terminal on the Internet transparently without caring about limitations of the firewall (gateway).

The data communication system of the invention is for a private IP terminal, including a connection attempt data table for storing normally possible settings for communication connection with a global IP terminal, path search means for automatically searching for communication connection settings capable of passing through a firewall by successively attempting connection to the global IP terminal by means of the communication connection settings stored in the connection attempt data table, and data communication means for performing data communication by forming a communication path with the global IP terminal based on the communication connection settings capable of passing through the firewall searched by the path search means.

The connection attempt data table can be adapted to all communication connection settings in principle by storing combinations of connection types, port numbers, and communication protocols as the communication connection settings.

The data communication means performs data communication by forming a plurality of communication paths based on a plurality of communication connection settings capable of passing through the firewall, whereby it can automatically make connection to the global IP terminal without artificial setting even if the communication connection needs a plurality of communication paths for control, sounds, and images.

In addition, the invention relates to a program for functioning a computer as a data communication system for a private IP terminal, including a connection attempt data table storing normally possible settings for communication connection with a global IP terminal, path search means for automatically searching for communication connection settings capable of passing through a firewall by successively attempting connection to the global IP terminal by means of the communication connection settings stored in the connection attempt data table, and data communication means for performing data communication by forming a communication path with the global IP terminal based on communication connection settings capable of passing through the firewall searched by the path search means.

Furthermore, the invention relates to a computer readable storage medium that records a program for functioning a computer as a data communication system for a private IP terminal, including a connection attempt data table storing normally possible settings for a communication connection with a global IP terminal, path search means for automatically searching for communication connection settings capable of passing through a firewall by successively attempting connection to the global IP terminal by means of the communication connection settings stored in the connection attempt data table, and data communication means for performing data communication by forming a communication path with the global IP terminal based on communication connection settings capable of passing through the firewall searched by the path search means.

### Brief Description of Drawings

Fig. 1 is an explanatory view of a data communication system according to an embodiment of the invention;
Fig. 2 is a flowchart of connection procedures in a private IP terminal;
Fig. 3 is a diagram of an example of a connection attempt data table;
Fig. 4 is a flowchart of connection procedures in a public server; and
Fig. 5 is an explanatory view of a conventional data communication system.

### Best Mode for Carrying Out the Invention

Hereinafter, a preferred embodiment of the invention is described in detail with reference to the accompanying drawings. However, this embodiment is not intended to limit the technical scope of the invention.

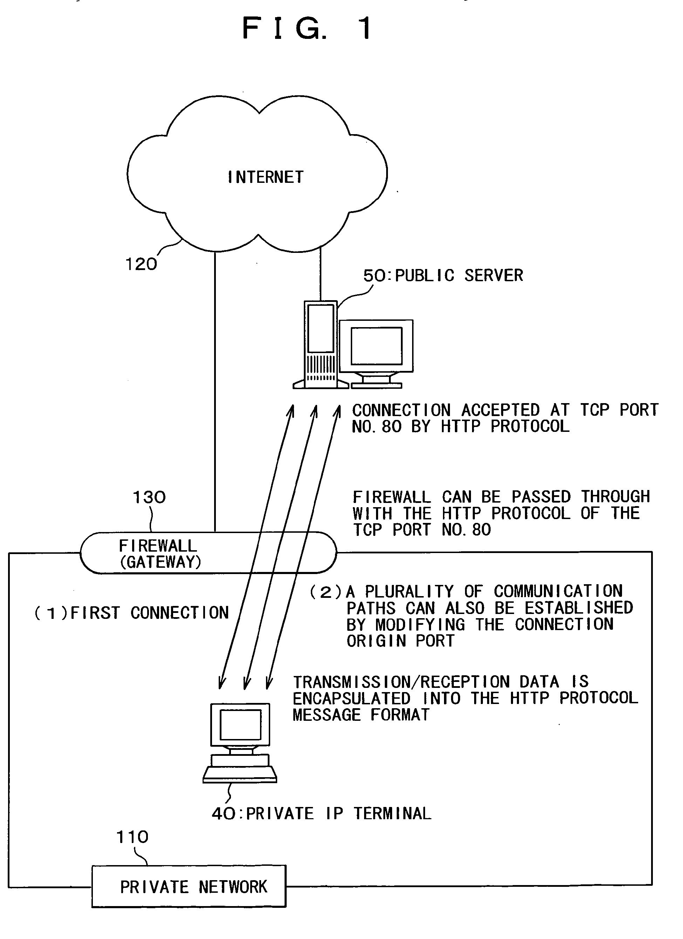

Fig. 1 is an explanatory view of a data communication system according to an embodiment of the invention. This data communication system is provided with a firewall (gateway) 130 at a connection point between a private network 110 and the Internet 120. A private IP terminal 40 is connected to the private network 110 at the inner side of the firewall (gateway) 130. In the private IP terminal 40, for example, an application program using a unique protocol is installed. Thereby, the private IP terminal 40 includes path search means for automatically searching a combination of a connection type, a port number, and a communication protocol capable of passing through the firewall 130 by attempting connection to a public server 50 on the Internet 120 while successively modifying the combination of the connection type, the port number, and the communication protocol, and data communication means for performing data communication with the server on the Internet by forming a communication path based on the searched combination of the connection type, the port number, and the communication protocol.

Fig. 1 shows an example of passing through the firewall 130 with an HTTP (HyperText Transfer Protocol) of a TCP port No. 80. In this case, transmission/reception data is encapsulated into a HTTP protocol message format and transmitted and received.

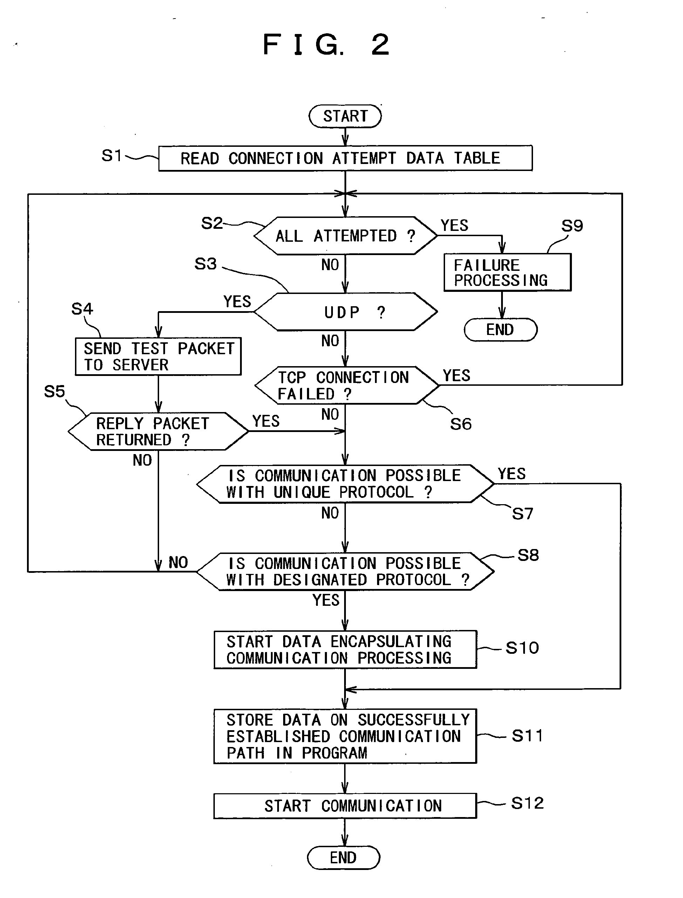

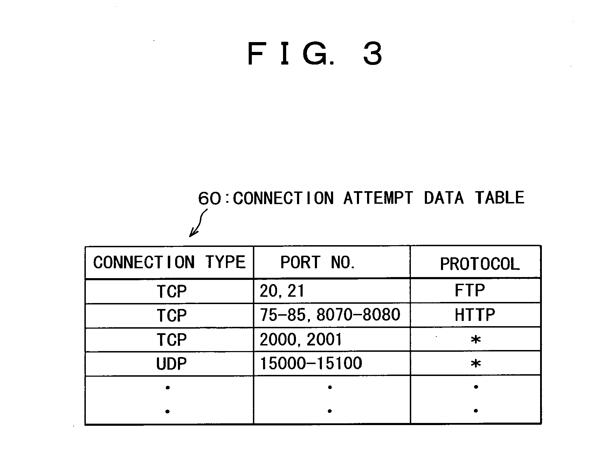

Fig. 2 is a flowchart of connection procedures in the private IP terminal, and Fig. 3 is a diagram of an example of a connection attempt data table.

The private IP terminal 40 reads the connection attempt data table 60 at Step S1. As shown in Fig. 3, in the connection attempt data table 60, all normally possible combinations of connection types including TCP, UDP, and the like, port numbers (connecting origin port numbers), and protocols are recorded.

Fig. 3 shows an example in which connection is attempted with an FTP (File Transfer Protocol) by using the respective TCP port Nos. 20 and 21, and then attempted with an HTTP protocol by using the respective ports of the TCP port Nos. 75 through 85 and 8070 through 8080, and then connection is attempted with the application unique protocol and a designated protocol by using the respective TCP port Nos. 2000 and 2001, and connection is attempted with the application unique protocol and the designated protocol by using the respective ports of the UDP port numbers 15000 though 15100. Herein, "application unique protocol" is unique to the application to be installed, and is private in many cases. Additionally, "designated protocol" is an HTTP protocol used between a WWW (World Wide Web) server and a Web browser when browsing a webpage or an SMTP (Simple Mail Transfer Protocol) used between a mail server and a mail client when sending a mail, and these protocols are open to the public, and port numbers of receiving sockets at servers are also known. Most of the normal firewalls (gateways) permit communication using such protocols between private networks and servers on the Internet.

The connection attempt data table 60 can be received from another terminal or the like, saved in a file such as a setting file, or hard-coded by program codes.

The private IP terminal 40 attempts connection to a desired public server 50 by calling a socket function according to a connection type, a port number, and a protocol designated in the connection attempt data table 60 as shown in Step S2 through Step S8.

In detail, in the case of a TCP (when it is judged that the protocol is not a UDP at Step S3), it is attempted whether a connection request with the TCP results in an error at Step S6. In the case of a UDP, a test packet is transmitted to the public server 50 (Step S4), and it is confirmed whether a reply packet is returned from the public server 60 (Step S5).

When a connection error does not occur, it is tested whether communication can be performed by using the port and the application unique protocol (Step S7). If communication cannot be performed with the application unique protocol, it is tested whether communication can be performed with a protocol designated in the connection attempt data table 60 (Step S8).

When communication can be performed with the application unique protocol, the data (a connection type, a port number, and a protocol) on the communication path that has been successfully established is stored in the application program at Step S11. Thereby, second and subsequent connections can be made by using the data (a connection type, a port number, and a protocol) stored in the application program. Namely, the execution of path searching can be reduced to the initial one.

When communication can be performed with a designated protocol (protocol designated in the connection attempt data table 60) although the communication cannot be performed with the application unique protocol, transmission/reception data is encapsulated into a protocol message format judged as capable of being communicated (Step S10), and then communication is started (Step S12). When communication can be performed with the designated protocol, data (a connection type, a port number, and a protocol) on the communication path that has been successfully established is stored in the application program at Step S11. Thereby, second and subsequent connections can be made by using the data (a connection type, a port number, and a protocol) on the communication path stored in the application program. Namely, the execution of path searching can be reduced to the initial one.

When a communication path capable of passing through the firewall 130 is not found even by attempting connection through all the communication paths registered on the connection attempt data table 60, the private IP terminal 40 performs failure processing such as indication for a user that no communication path capable of passing through the firewall 130 is not found at Step S9, and then ends the connection processing.

As shown in Fig. 1, it is also possible that the private IP terminal 40 secures a communication path established first as, a communication path for control for example, and establishes other communication paths (for example, communication paths for images and communication paths for sounds) by modifying the connection origin port number, whereby establishing a plurality of communication paths.

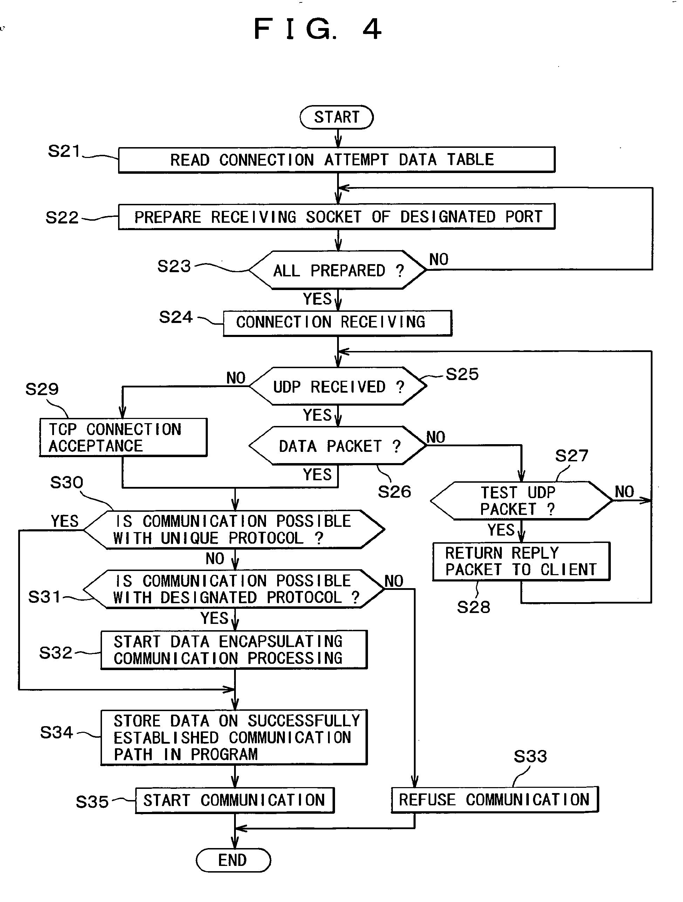

Fig. 4 is a flowchart of connection procedures in a public server. The public server 50 reads the connection attempt data table 60 shown in Fig. 3 at Step S21. It is also possible that the connection attempt data table 60 is received from another terminal, saved in a file such as a setting file, or hard-coded by program codes.

The public server 50 prepares a receiving socket for each of all designated ports based on the connection attempt data table 60 (Step S22 and Step S23). The public server 50 calls a function of a waiting receptacle socket according to the connection type, the port number, and the protocol designated in the connection attempt data table 60, whereby it turns into a state of waiting for a connection from the private IP terminal 40 as a client (Step S24). Thereby, connection receiving processing is started.

When the public server 50 receives a test packet of a UDP (Steps S25, S26, and S27), it replies a reply packet to the private IP terminal 40 as a client (Step S28).

When the public server 50 accepts a TCP connection request from the private IP terminal 40 as a client (Step S29), it checks whether communication can be performed with the application unique protocol (unique protocol) by using the port (Step 530) . In detail, it inspects whether the data format is a unique protocol message format.

When the communication is not in the unique protocol message format (communication cannot be performed with the unique protocol) at Step S30, the public server checks whether communication can be performed with a protocol designated in the connection attempt data table 60 (Step S31). When communication can be performed with the protocol (designated protocol) designated in the connection attempt data table 60, the public server 50 accepts a connection request with the designated protocol. Then, the public server 50 encapsulates the transmission/reception data in the designated protocol message format judged at Step S31 (Step S32), and starts communication (Step S35). When communication cannot be performed with the designated protocol, processing to refuse the communication is performed at Step S33.

The public server 50 stores, in the program at Step S34, the data (the connection type, the port number, and the protocol) on the communication path that has been successfully established.

It is also possible that a plurality of communication paths are established by modifying the connection origin port number of the client (private IP terminal 40) side in addition to the communication path established first.

The invention is not limited to the embodiment described above.

In the embodiment described above, the public server 50 also reads the connection attempt data table 60 and prepares a receiving socket designated in the connection attempt data table 60 in advance, whereby reducing the burden on connection waiting, however, if the resources permit, it is also possible that all possible receiving sockets are prepared so that the public server 50 is not required to read the connection attempt data table 60.

The data communication system of the invention is also realized as a program for functioning a computer as this data communication system. This program may be stored in a computer-readable storage medium.

The storage medium recording this program may be a storage device itself inside the private IP terminal 40 or the public server 50 shown in Fig. 1, or a CD-ROM or the like that can be read by being inserted in a program reading device such as a CD-ROM driver provided as an external storage device.

The storage medium may be a magnetic tape, a cassette tape, a flexible disk, a hard disk, MO/MD/DVD or the like, or a semiconductor memory. Industrial Applicability

The invention provides a data communication system for a private IP terminal which can make connection to a global IP terminal by automatically searching for a communication path capable of passing through a firewall without requiring artificial communication connection settings.

## Claims

1. A data communication system for a private IP terminal, comprising:
a connection attempt data table storing normally possible settings of communication connection with a global IP terminal;
path search means for automatically searching for communication connection settings capable of passing through a firewall by successively attempting connection to said global IP terminal by the communication connection settings stored in said connection attempt data table; and
data communication means for performing data communication by forming a communication path with said global IP terminal based on communication connection settings capable of passing through the firewall searched by said path search means.

2. The data communication system according to Claim 1, wherein said connection attempt data table stores combinations of connection types, port numbers, and communication protocols as said communication connection settings.

3. The data communication system according to Claim 1 or 2, wherein said data communication means performs data communication by forming a plurality of communication paths based on a plurality of communication connection settings capable of passing through a firewall.

4. A program which makes a computer operate as:
a data communication system for a private IP terminal comprising: a connection attempt data table storing normally possible settings of communication connection with a global IP terminal; path search means for automatically searching for communication connection settings capable of passing through a firewall by successively attempting connection to said global IP terminal by the communication connection settings stored in said connection attempt data table; and data communication means for performing data communication by forming a communication path with said global IP terminal based on communication connection settings capable of passing through the firewall searched by said path search means.

5. A computer-readable storage medium having a program recorded thereon, where the program makes a computer operate as:
a data communication system for a private IP terminal comprising: a connection attempt data table storing normally possible settings of communication connection with a global IP terminal; path search means for automatically searching for communication connection settings capable of passing through a firewall by successively attempting connection to said global IP terminal by the communication connection settings stored in said connection attempt data table; and data communication means for performing data communication by forming a communication path with said global IP terminal based on communication connection settings capable of passing through the firewall searched by said path search means.
